# EUROPEAN PATENT APPLICATION

(11) **EP 3 115 925 A1**
(43) Date of publication of application: **11.01.2017**
(21) Application number: 15175750.7
(22) Date of filing: 07.07.2015
(51) Int. Cl.: G06K 9/00, G06K 9/42, G01J 3/28, G06T 7/00

(54) **METHOD AND SYSTEM FOR TRANSFORMING SPECTRAL IMAGES**

(71) Applicant: VITO NV, 2400 Mol (BE)
(72) Inventor: The designation of the inventor has not yet been filed
(74) Representative: Beck, Michaël Andries T.

(57) **Abstract**

The invention pertains to a method for transforming a set of spectral images, the method comprising: dividing the images in said set in identically arranged areas; for each of said areas, calculating a predetermined characteristic across said set of images; and, for each of said images, renormalizing intensity values in each of said areas in function of said predetermined characteristic of said area. The invention also pertains to a corresponding computer program product and a corresponding image processing system.

## Description

### Field of the Invention

The invention relates to the field of image processing, e.g. to be applied to images acquired in aerial imaging. More particularly, the present invention relates to a method and a system for transforming spectral images.

### Background

In the field of multispectral and hyperspectral imaging, an alternative to the traditional "pushbroom" method of image acquisition has recently been proposed. The alternative consists of using a two-dimensional sensor provided with a thin-film spectral filter that renders different parts of the sensor sensitive to different wavelengths. The variation of the transmitted wavelength is typically gradual or stepwise along the direction in which the sensor is moved across the scenery (i.e., the direction of flight in the case of an aircraft or spacecraft mounted sensor arrangement).

A sensor of this type has been disclosed in international patent application publication no. WO 2011/064403 A1, entitled "Integrated Circuit for Spectral Imaging System", in the name of IMEC.

A significant challenge that presents itself in connection with the use of filter-based multispectral sensors, is the geometric referencing and registration of the acquired multispectral images.

One way of addressing the issue of referencing the spectral images consists of simultaneously acquiring a series of panchromatic images with a known, fixed relationship to the spectral images. A sensor arrangement adapted for such simultaneous acquisition has been disclosed in detail in international patent application publication no.

WO 2011/073430 A1, entitled "Geometric Referencing of Multi-Spectral Data", in the name of the present applicant. This solution increases the amount of data that is generated by the sensing device and that must somehow be transmitted back from the sensing device to the image processing infrastructure. Such transmissions may be costly and/or time consuming.

Hence, there is a need for methods of referencing and registering multispectral and hyperspectral images that do not rely on additional panchromatic image information.

### Summary of the Invention

According to an aspect of the present invention, there is provided a method for transforming a set of spectral images, the method comprising: dividing the images in said set in identically arranged areas; for each of said areas, calculating a predetermined characteristic across said set of images; and, for each of said images, renormalizing intensity values in each of said areas in function of said predetermined characteristic of said area.

For the said areas, one or more representative characteristics of the intensity values can be calculated. The average intensity value over the area is one such characteristic. Another useful characteristic is the standard deviation of the intensity values, which gives an indication of the contrast which will be measured. More generally, the distribution of the intensity values could be calculated and represented in a larger set of characteristics. The set of obtained characteristics per area can be used as normalization coefficients. After applying normalization using the characteristics, the values of those characteristics become uniform over different areas in in the resulting images.

The procedure to determine the normalization coefficients is carried out by averaging over a sufficiently large set of images, in order to average out the effect of the image content. Afterwards, the normalization can be carried out using the established coefficients, either on the same images, or on other images acquired in a similar way with the same instrument. This procedure simplifies the way of working as it is not necessary to calculate new coefficients for every new set of images.

The present invention is *inter alia* based on the insight of the inventors that the co-registration of different spectral images is rendered more difficult by the fact that physical features appear differently in different images of the acquisition series, because they have been acquired by different parts of the sensor, which are responsive to different wavelength bands due to the presence of the filter.

The present invention is *inter alia* further based on the insight of the inventors that there are two components to the difference in intensity of a given physical feature between different spectral images of the same acquisition series, which represent the physical feature in different wavelength bands: (1) the physical feature may have a different reflectivity in different wavelength bands and (2) the sensor may have a different sensitivity in different wavelength bands. The second factor can be compensated by renormalizing the various parts of the images relative to an average value that is representative for each respective part.

While it is not possible to compensate for the first factor, the inventors have surprisingly found that the efficiency of registration algorithms already greatly improves after compensating the second factor alone. The effect is believed to be due to the fact that real-world physical objects typically exhibit a slowly varying reflectivity in function of wavelength over a large part of the spectrum of interest.

In an embodiment of the method according to the present invention, the predetermined characteristic is an average intensity, and the renormalizing comprises renormalizing the intensity values in each of the areas relative to the average intensity value.

In an embodiment of the method according the present invention, the areas correspond to individual pixels.

It is an advantage of this embodiment that the sensor is effectively calibrated on a per-pixel basis, such that variations in sensitivity of individual pixel-filter combinations can be accounted for, regardless of the source of such variations (including manufacturing tolerances or impurities in the filter). This leads to a maximal suppression of artefacts. By adding an optical system to the pixel-filter combinations, a complete imaging system is obtained. It can be chosen to include sensitivity variations caused by the optical system to correct for those, or to exclude them so that the system remains generic for different optical systems.

In an embodiment of the method according the present invention, the areas correspond to distinct wavelength bands.

It is an advantage of this embodiment that the renormalization can be performed per block of pixels, wherein a block typically represents a rectangular strip of the sensor or a combination of multiple rectangular areas.

According to an aspect of the present invention, there is provided a computer program product comprising code means configured to instruct a processor to carry out the steps of the method as described above.

According to an aspect of the present invention, there is provided a system for transforming spectral images, the system comprising: inputting means adapted to receive a set of spectral images; processing means configured to: divide the images in said set in identically arranged areas, for each of said areas, calculate a predetermined characteristic across said set of images; and, for each of said images, renormalizing intensity values in each of said areas in function of said predetermined characteristic of said area; and outputting means adapted to output said set of images as processed by said processing means.

In an embodiment of the system according to the present invention, the predetermined characteristic is an average intensity, and the renormalizing comprises renormalizing the intensity values in each of the areas relative to the average intensity value.

In an embodiment of the system according the present invention, the areas correspond to individual pixels.

In an embodiment of the system according the present invention, the areas correspond to distinct wavelength bands.

The technical effects and advantages of embodiments of the computer program product and the system according to the present invention correspond *mutatis mutandis* to those of the corresponding embodiments of the method according to the present invention.

### Brief Description of the Figures

These and other technical effects and advantages of embodiments of the present invention will now be described in more detail with reference to the accompanying drawings, in which:
- Figure 1 provides a perspective view of the region imaged by consecutive acquisitions of a multi-spectral sensor, in particular a hyperspectral sensor;
- Figure 2 provides a flow chart of an embodiment of the method according to the present invention;
- Figure 3 schematically illustrates an embodiment of the system according to the present invention; and
- Figure 4 provides a flow chart of another embodiment of the method according to the present invention.

### Description of Embodiments

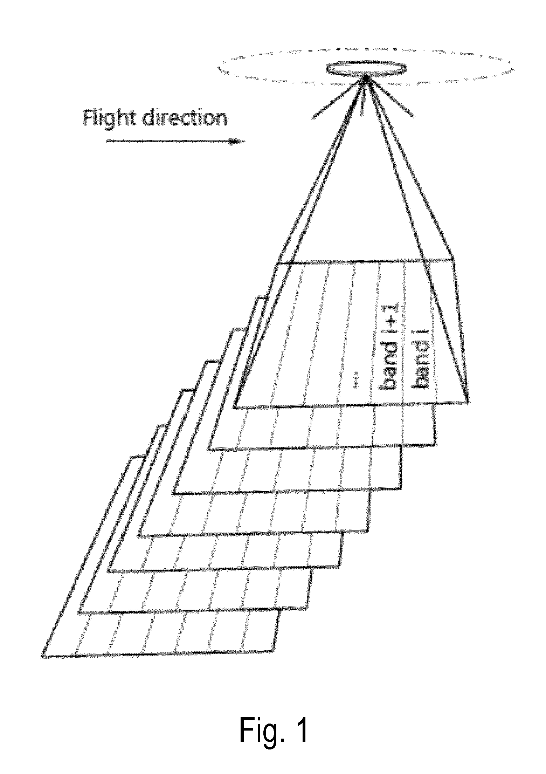

Figure 1 provides a perspective view of the region imaged by consecutive acquisitions of a multi-spectral sensor, in particular a hyperspectral sensor. An example of a hyperspectral sensor is disclosed in the aforementioned international patent application publication WO 2011/073430 A1, in the name of the present applicant, where it is described as the "first sensor", operating in conjunction with a second (visual-range) sensor. While the "first sensor" of WO 2011/073430 A1 shall be referred to in order to clarify the present invention, it must be understood that the present invention is not limited thereto.

It is typical of such hyperspectral sensors that different parts of the sensing element are sensitive to different wavelengths. This effect may be obtained by providing a sensing element with a filtering layer that has a wavelength response that varies across the surface of the sensing element. Accordingly, each image taken by such a hyperspectral sensor is in fact a mosaic in which different parts of the image represent the corresponding part of the terrain as seen in radiation of different respective wavelength bands. In order to obtain an image of any given area as seen in radiation of one specific wavelength band, the relevant parts of a large number of such mosaics must be pieced together. It is clear that these hyperspectral sensors require closely spaced images (which, depending on the speed of the sensor movement, may require a very high frame rate) to ensure full spatial coverage in all the relevant bands of the spectrum.

The inventors have found that the efficiency of the geometric referencing of these spectral images, which is required for "piecing together" images in any given wavelength band, is greatly improved by carrying out a preliminary renormalization step.

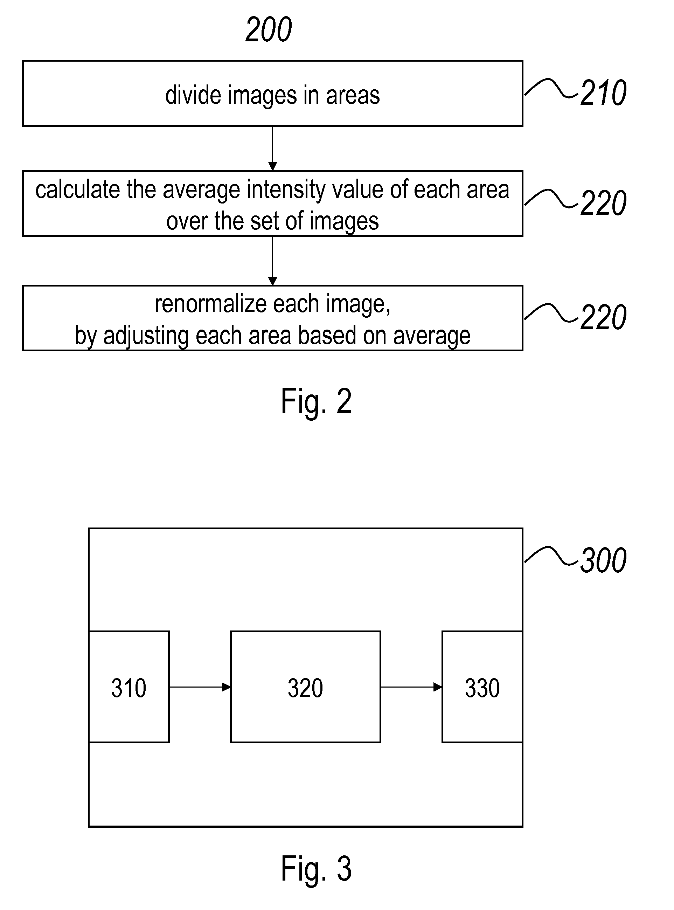

Figure 2 provides a flow chart of an embodiment of the method according to the present invention.

In a first step, the illustrated embodiment of the method 200 for transforming a set of spectral images comprises dividing 210 the images in said set in identically arranged areas. The areas may correspond to individual pixels, strips of pixels that are sensitive to the same wavelength band, or any other grouping of pixels.

For each of the areas, an average intensity value is calculated **220** across the set of images. The detector response is the pixel value as sensed by the respective pixels of the sensor upon exposure (e.g. as represented by an amounted of charge accumulated as a result of the incidence of photons on a CCD or CMOS sensor), and is normally a scalar (grayscale) value, which represents the intensity of the pixel. The "average" may be an appropriate statistic of the intensity value such as arithmetic or geometric average, an appropriately selected percentile value, or a median value. While this step is illustrated as a single operation, the skilled person will understand that this operation may for example be carried out in iterative or parallelized way.

For each of the images, the intensity values in each of the areas are renormalized **230** relative to the average of said area. The renormalization may consist of dividing each scalar pixel value by the average value of the area to which the pixel in question belongs. While this step is illustrated as a single operation, the skilled person will understand that this operation may for example be carried out in iterative or parallelized way.

The result of the renormalization step may be that a hypothetical object with a perfectly flat spectral response (i.e., completely white across the spectrum of interest) would appear with identical intensity in each one of the renormalized images. Thus, the resulting images could serve as simulated panchromatic images.

Once the images of the set have been renormalized, they may be used as an input in any desired processing algorithm (not illustrated), as exemplified below.

Figure 3 schematically illustrates an embodiment of the system according to the present invention. The illustrated system **300** comprises inputting means **310** adapted to receive a set of spectral images.

The system **300** further comprises processing means **320** configured to:
- divide the images in the set in identically arranged areas;
- for each of the areas, calculate an average intensity value across the set of images; and,
- for each of the images, renormalizing intensity values in each of the areas relative to the average of the area.

The processing means **320** may be implemented in dedicated hardware (e.g., ASIC), configurable hardware (e.g., FPGA), programmable components (e.g., a DSP or general purpose processor with appropriate software), or any combination thereof. The same component(s) may also include other functions. The system **300** further comprises outputting means **330** adapted to output the set of images as processed by the processing means **320.**

The terms "inputting means" and "outputting means" designates the necessary hardware and software to communicate with another entity capable of providing and accepting data, respectively. Preferably, such hardware and software operates according to accepted industry standards. Accordingly, the physical and data link layer aspects of the interfacing means may operate in accordance with standards such as IEEE Std 802.3 (Ethernet), IEEE Std 802.11 (Wireless LAN), USB, and the like. The network and transport layer aspects of the interfacing means may operate in accordance with the TCP/IP protocol stack. The various interfaces mentioned herein **(310, 320)** may share hardware and/or software.

After the renormalization process described above, the method according to the present invention may include further steps to be carried out on the renormalized images. In the illustrated embodiment of the system according to the present invention, these steps may be carried out by the processing means **320** or an additional system connected to the outputting means **330.**

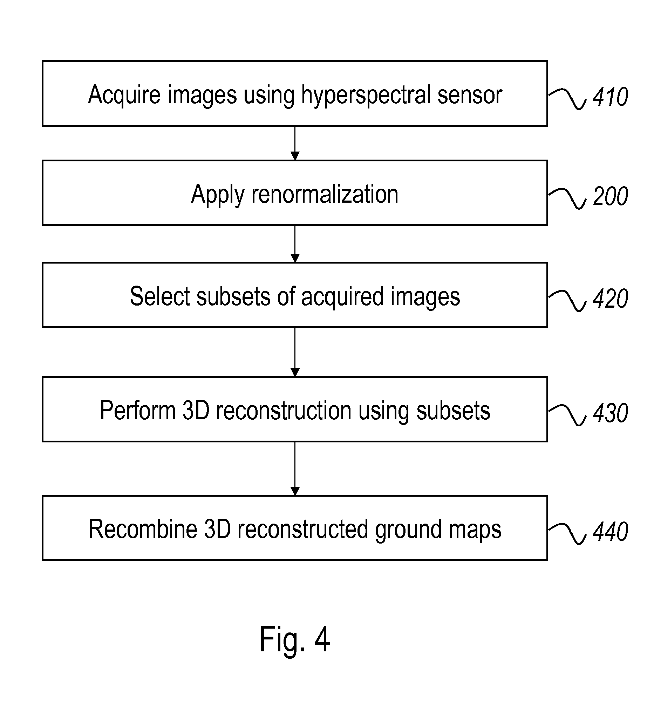

Figure 4 provides a flow chart representing an exemplary photogrammetric operation that may advantageously be carried out after renormalization according to an embodiment of the present invention. The method performs photogrammetric 3D reconstruction of objects imaged in a sequence of images, which contain distinct areas representing imaged radiation in respective distinct wavelengths. These images are first acquired **410,** typically with a hyperspectral sensor as described above. The sensor may be carried on board of an aerial vehicle. The renormalization operation is shown as pre-processing step **200,** which corresponds to the steps explained above in connection with Figure 2. The method then comprises selecting **420** a plurality of subsets from the sequence of images, each one of the plurality of subsets containing a plurality of images, each image of which represents a field of view that overlaps with a field of view of at least one other image in the same subset. Preferably, the subsets are mutually disjoint, and the union of said subsets coincides with said sequence of images. Next, a set of intermediate 3D models is generated **430** by performing photogrammetric 3D reconstruction on the images in respective ones of the subsets. These intermediate 3D models are then recombined **440** from the set of 3D models into a combined 3D model. For multi-spectral or hyperspectral images, 3D reconstruction can proceed in the same way as for single wavelength band images, e.g. by detecting the position shift and the related viewing angle difference of the same feature as it appears in different images.

The present invention also includes a computer program product which provides the functionality of any of the methods according to the present invention when executed on a computing device. Such computer program product can be tangibly embodied in a carrier medium carrying machine-readable code for execution by a programmable processor. The present invention thus relates to a carrier medium carrying a computer program product that, when executed on computing means, provides instructions for executing any of the methods as described above. The term "carrier medium" refers to any medium that participates in providing instructions to a processor for execution. Such a medium may take many forms, including but not limited to, non-volatile media, and transmission media. Non volatile media includes, for example, optical or magnetic disks, such as a storage device which is part of mass storage. Common forms of computer readable media include, a CD-ROM, a DVD, a flexible disk or floppy disk, a tape, a memory chip or cartridge or any other medium from which a computer can read. Various forms of computer readable media may be involved in carrying one or more sequences of one or more instructions to a processor for execution. The computer program product can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fiber optics, including the wires that comprise a bus within a computer.

While the invention has been described hereinabove with reference to specific embodiments, this was done to clarify and not to limit the invention. The skilled person will appreciate that various modifications and different combinations of disclosed features are possible without departing from the scope of the invention.

## Claims

1. A method for transforming a set of spectral images, the method comprising:
- dividing (210) the images in said set in identically arranged areas;
- for each of said areas, calculating (220) a predetermined characteristic across said set of images; and,
- for each of said images, renormalizing (230) intensity values in each of said areas in function of said predetermined characteristic of said area.

2. The method according to claim 1, wherein said predetermined characteristic is an average intensity, and said renormalizing comprises renormalizing said intensity values in each of said areas relative to said average intensity value.

3. The method according to claim 1 or claim 2, wherein the areas correspond to individual pixels.

4. The method according to claim 1 or claim 2, wherein the areas correspond to distinct wavelength bands.

5. A computer program product comprising code means configured to instruct a processor to carry out the steps of the method according to any of the preceding claims.

6. A system (300) for transforming spectral images, the system comprising:
- inputting means (310) adapted to receive a set of spectral images;
- processing means (320) configured to:
- divide the images in said set in identically arranged areas;
- for each of said areas, calculate a predetermined characteristic across said set of images; and,
- for each of said images, renormalizing intensity values in each of said areas in function of said predetermined characteristic of said area; and
- outputting means (330) adapted to output said set of images as processed by said processing means (320).

7. The system according to claim 6, wherein said predetermined characteristic is an average intensity, and said renormalizing comprises renormalizing said intensity values in each of said areas relative to said average intensity value.

8. The system according to claim 7, wherein the areas correspond to individual pixels.

9. The system according to claim 7, wherein the areas correspond to distinct wavelength bands.
